# EUROPEAN PATENT APPLICATION

(11) **EP 1 566 250 A1**
(43) Date of publication of application: **24.08.2005**
(21) Application number: 03758875.3
(22) Date of filing: 24.10.2003
(51) Int. Cl.: B29C 33/72, F26B 5/08, F26B 11/18, F26B 21/00

(54) **SCRUB WASHING METHOD, SCRUB WASHING DEVICE, LENS FORMING DIE DRYING METHOD, LENS FORMING DIE DRYING DEVICE, AND PLASTIC LENS MANUFACTURING METHOD**

(30) Priority: 25.10.2002 JP 2002311064; 26.12.2002 JP 2002378060; 21.10.2003 JP 2003361066
(71) Applicant: SEIKO EPSON CORPORATION, Tokyo 163-0811 (JP)
(72) Inventor: HOSODA, Takashi, Suwa-shi, Nagano 392-8502 (JP); SANO, Yoshio, Suwa-shi, Nagano 392-8502 (JP); KARASAWA, Isao, Suwa-shi, Nagano 392-8502 (JP)
(74) Representative: Melzer, Wolfgang
(86) International application number: PCT/JP2003/013623
(87) International publication number: WO 2004/037506

(57) **Abstract**

A self-washing step of rotating elastic polishing members 230, supplying a liquid L to the elastic polishing members 230, and, in this condition, pressing pressing units 220 against the elastic polishing members 230 to deform the elastic polishing members 230, thereby washing the elastic polishing members 230 themselves is added to a scrubbing step of rotating lens molds 1, 2, rotating the elastic polishing members 230, pressing the elastic polishing members 230 against the surfaces of the lens molds, and, in this condition, supplying the liquid to the areas between the surfaces of the lens molds 1, 2 and the elastic polishing members 230, thereby washing the lens molds 1, 2. In a drying step, hot water is supplied to the lens molds 1, 2 being rotated, and thereafter dry air is supplied thereto.

It is possible to securely remove foreign matter and dirt from the surfaces of the lens molds for molding a plastic lens, and to clean the surfaces of the lens molds without leaving water discoloration or stains thereon.

## Description

### Technical Field

The present invention relates to a technology for washing and drying a lens mold used for cast polymerization molding of a plastic lens and to a method of manufacturing a plastic lens by use of a lens mold.

### Background Art

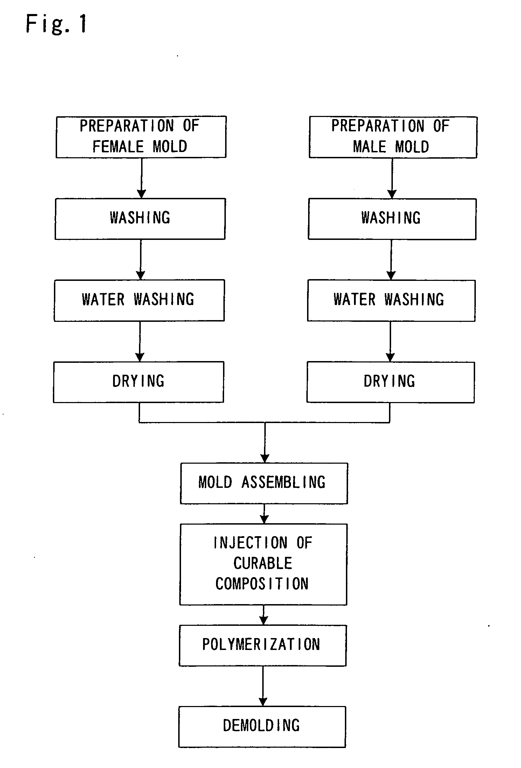

Fig. 1 shows a flowchart of a conventionally known method for molding a plastic lens by cast polymerization. The plastic lens molding method includes the steps of preparing a female mold and a male mold, washing at least the molding surfaces of the molds by use of an abrasive or a chemical, thereafter washing the molds with water, drying the molds to thereby clean the molds, assembling the thus cleaned female and male molds to form a mold assembly by a tape mold process or the like, injecting a curable composition into the mold assembly, polymerizing and curing the curable composition, and then demolding the cured product.

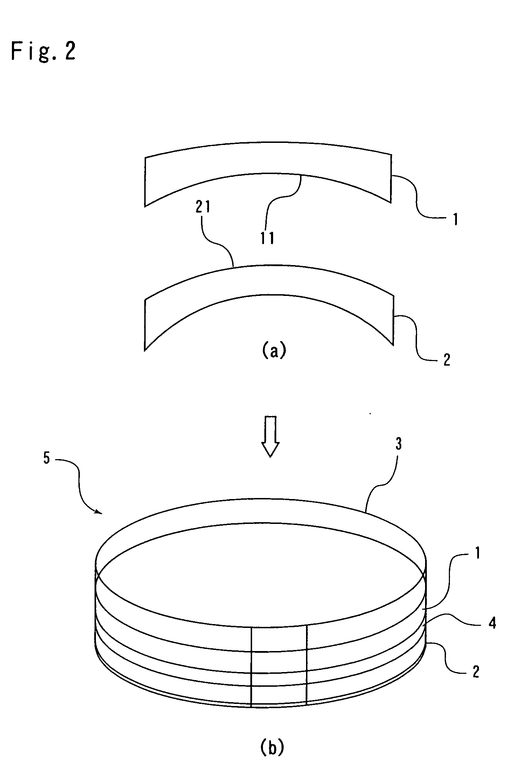

Figs. 2 illustrate schematically the tape mold process. As shown in Fig. 2(a), a glass-made lens mold (female mold) 1 for molding a convex surface and a glass-made mold (male mold) 2 for molding a concave surface are prepared, then, as shown in Fig. 2(b), the convex surface molding surface 11 of the female mold 1 and the concave surface molding surface 21 of the male mold 2 are opposed to each other, and a pressure sensitive adhesive tape 3 is wound around the circumferential surfaces of the lens molds 1, 2 to seal the gap therebetween, to construct a lens mold assembly 5.

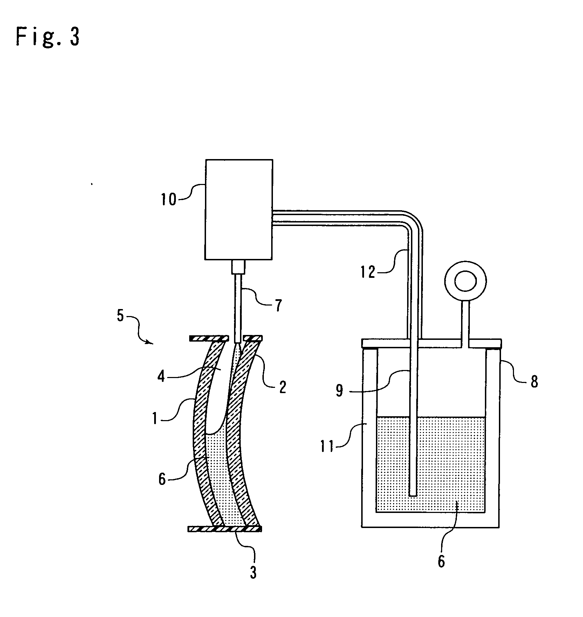

Fig. 3 illustrates an example of a curable composition injection step. A curable composition 6 is injected into the gap (cavity) 4 between the molds of the constructed lens mold assembly 5 to fill up the cavity 4 with the curable composition 6, and then an injection port formed in the pressure sensitive adhesive tape 3 is sealed off. Thereafter, the curable composition 6 is cured by energy such as heat, UV rays, etc., whereby a plastic lens can be obtained.

If dirt or foreign matter is present on the lens molds 1, 2, the dirt or foreign matter would be transferred onto the plastic lens obtained, to directly exert bad effects on the optical surfaces; therefore, it is necessary to completely remove the dirt or foreign matter. For this purpose, a method is adopted in which at least the molding surfaces 11 and 21 of the lens molds 1, 2 are subjected to precise washing immediately before wounding the pressure sensitive adhesive tape 3, and the lens mold assembly 5 is constructed while maintaining the cleanliness.

As a method for washing the lens molds 1, 2, there is an ultrasonic washing method using a detergent, as described in an embodiment in Japanese Patent Laid-open No. 2000-102932. A method of washing a mold by use of a sponge roll is described in an embodiment in Japanese Patent Laid-open No. Hei 5-84755. In this washing method, the mold is scrubbed using a urethane foam while supplying water. Besides, Japanese Patent Laid-open No. Hei 11-48117 discloses a method of reforming the surface of an optical member in which the surface is rubbed with a member obtained by softening an abrasive-containing resin through wetting.

Among these washing methods, the scrubbing method of washing a lens mold by rubbing it with an elastic polishing member is the best for removing contaminants from the lens mold. In this case, when an abrasive is intermediately present, it is possible to remove the dirt which would otherwise be difficult to remove.

However, the scrubbing methods of washing a lens mold by use of the sponge roll or the elastic polishing member obtained by softening an abrasive-containing resin through wetting have the problem that the dirt or foreign matter may remain on the elastic polishing member after the lens mold is washed. If the elastic polishing member with the dirt or foreign matter deposited thereon is directly used for washing the lens mold, the dirt or foreign matter may be transferred onto the surface of the lens mold or the lens mold surface may be marred. The dirt or foreign matter or scratches present on the surface of the lens mold may directly exert bad effects on the optical surface of the molded lens, thereby lowering the yield of the lens. Besides, in the methods of washing a lens mold by use of the sponge roll or the elastic polishing member obtained by softening an abrasive-containing resin through wetting, there is the problem that the elastic polishing member would be dried when washing is at rest for a long time, and, when the dried elastic polishing member is directly used for washing, the molding surface of the lens mold would be marred. The flaws in the molding surface of the lens mold would eventually be transferred onto the lens produced, thereby yielding defective products and lowering the yield of the lens.

The present invention has been made in consideration of the above circumstances. Accordingly, it is a first object of the present invention to provide a scrubbing method and a scrubbing apparatus by which it is possible to wash a lens mold without leaving dirt on the lens mold and without marring the lens mold.

In addition, after the washing of the lens molds 1, 2, it is necessary to dry the lens molds 1, 2 having been wetted with water. If such defects as water discoloration and stains are present on the surfaces of the lens molds 1, 2, the defects would be transferred onto the optical surfaces of the lens. Therefore, the drying of the lens molds 1, 2 having been wetted with water must be so conducted as not to generate such defects.

Conventionally, as a method for drying a lens mold having been wetted with water, there have been proposed a method in which a lens mold is dried by use of a flon-based, alcohol-based or chlorine-based organic solvent or the like organic solvent (see, for example, Japanese Patent Laid-open Nos. Hei 5-114594 and Hei 5-185042), a method in which a lens mold is immersed in pure water, is then pulled up from pure water and is drained and dried (see, for example, Japanese Patent Laid-open Nos. Hei 6-230325 and Hei 5-50046), and a method in which an organic solvent is not used and water is blown off by jetting compressed air (see, for example, Japanese Utility Model Laid-open No. Hei 5-40795 and Japanese Patent Laid-open No. Hei 5-193123). In addition, there has also been proposed a method in which an optical component part wetted with water is warmed up by blowing hot air thereto and is then dried in air (see, for example, Japanese Patent Laid-open Nos. Hei 7-124529 and Hei 10-199854). Further, there have been proposed a method in which an optical component part is placed in a hermetically sealed vessel for vacuum drying (see, for example, Japanese Patent Laid-open No. Hei 5-172461) and a method in which an optical component part is drained by vibrating it (see, for example; Japanese Patent Laid-open No. Hei 5-127397).

However, the drying method using a flon-based organic solvent exerts a high burden on the environments because of the use of the ozone layer destructive substance. The drying method using an alcohol-based or chlorine-based organic solvent, due to the use of the inflammable substance, makes it necessary to use an apparatus with explosion-proof specifications, which is expensive. The drying method utilizing draining through rotation has the merits that the apparatus may be smaller than in the immersion system and the lens molds can be treated one by one, but the method has the demerit that water or moisture will easily remain in the surroundings of the optical component part and a long time is taken to achieve drying. The method in which the lens mold is immersed in pure water, is then pulled up from pure water and is drained and dried has the problem that an immersion tank with a large capacity is needed, leading to a large-scale apparatus, and a jig for holding the lens mold is needed. In the method in which water is blown off by jetting compressed air, water thus blown off may re-adhere to the surface of the lens mold, causing water discoloration, stains or the like. In the method in which an optical component part wetted with water is warmed up by blowing hot air thereto and is then dried in air, the drying process is long, and it is difficult to control the temperature of the optical component part, which makes it impossible to maintain good quality. The method in which an optical component part is placed in a hermetically sealed vessel for vacuum drying and the method in which an optical component part is vibrated for draining are disadvantageous in that a large-scale apparatus is needed.

The present invention has been made in consideration of the above circumstances. Accordingly, it is a second object of the present invention to provide a lens mold drying method and a lens mold drying apparatus by which a lens mold can be dried without using an organic solvent, without needing any large-scale equipment for vacuum drying or the like, and while promising good appearance quality free of water discoloration, stains or the like.

Besides, the step of injecting the curable composition 6 into the lens mold assembly 5 shown in Fig. 3 is conducted as follows. First, the pressure sensitive adhesive tape 3 is provided with a prepared hole in a predetermined position thereof, and an injection nozzle 7 is inserted into the prepared hole portion. In the lens mold assembly 5 for molding a convex lens, the spacing between the two lens molds 1, 2 at a circumferential portion is small, an injection nozzle 7 very small in diameter at the tip end thereof is used so that it can be inserted into the small spacing. A pressure is applied to the inside of a pressure vessel 8, whereby the curable composition 6 charged in the pressure vessel 8 is fed under pressure through a piping 9 and a valve 10 into the injection nozzle 7, and is injected into the cavity 4. Upon detection of that the cavity 4 has been filled with the curable composition 6, the valve 10 is closed to finish the injection, and the injection port is sealed off.

Such an injection method as above has had the following problems. The volume of the cavity 4 in the lens mold assembly 5 ranges from about 10 ml to about 100 ml. However, the tip end of the injection nozzle 7 is very small in diameter. In order to enhance production capacity, therefore, it is necessary to heat the curable composition 6 to be charged, thereby lowering the viscosity of the curable composition 6 and increasing the injection flow rate. In view of this, a heater 11 is disposed on the wall surfaces of the pressure vessel 8, and a heater 12 is wound around the piping 9, whereby the curable composition 6 is heated at the time of being charged into the cavity 4. Where the curable composition 6 is heated, however, optical strains may be generated in the plastic lens obtained by molding, with the result of lowering in yield.

The present invention has been made in consideration of the above circumstances. Accordingly, it is a third object of the present invention to provide a method of manufacturing a plastic lens by which it is possible to restrain the generation of optical strains in the plastic lens obtained, and to enhance the yield of the plastic lens, even where a curable composition is heated at the time of being injected into a lens mold assembly for cast polymerization of the plastic lens.

### Disclosure of Invention

In order to attain the first object mentioned above, according to the present invention, there is provided a scrubbing method including: a washing step of rotating a lens mold for molding a plastic lens, pressing an elastic polishing member against a surface of the lens mold while rotating the elastic polishing member, and, in this condition, supplying a liquid to the area between the surface of the lens mold and the elastic polishing member so as thereby to wash the lens mold; and a self-washing step of rotating the elastic polishing member, supplying a liquid to the elastic polishing member, and, in this condition, deforming the elastic polishing member so as thereby to wash the elastic polishing member.

In the washing step, the lens mold is scrubbed with the elastic polishing member, and, in the self-washing step, the elastic polishing member itself used for the scrubbing is washed, whereby dirt or foreign matter adhering to the elastic polishing member can be washed away. By performing the self-washing step, the dirt or foreign matter can be prevented from re-adhering from the elastic polishing member onto the lens mold. In addition, by performing the self-washing step, the elastic polishing member can be prevented from being dried. Therefore, the lens mold can be washed without leaving the dirt or foreign matter on the lens mold and without marring the lens mold.

As the liquid used in the washing step and the self-washing step, a slurry containing an abrasive dispersed in water may be used. In this case, in the washing step, the slurry containing an abrasive dispersed in water is supplied to the area between the surface of the lens mold and the elastic polishing member, and the surface of the lens mold is polished through the abrasive, whereby dirt can be removed effectively. In the self-washing step, the slurry is supplied to the elastic polishing member, whereby the elastic polishing member itself can be washed effectively.

As the liquid used in the washing step and the self-washing step, water may be used. In this case, in the washing step, the surface of the lens mold can be cleaned by scrubbing the surface with water. In the self-washing step, the elastic polishing member is washed with water, whereby dirt or foreign matter having been deposited on the elastic polishing member itself can be removed.

In the self-washing step, a rod-like member and the elastic polishing member may be pressed against each other, whereby the elastic polishing member can be deformed largely, so that the elastic polishing member can be self-washed effectively.

With the washing step and the self-washing step conducted alternately, the self-washing step is carried out between the washing steps, whereby the washing step can always be conducted with the cleaned elastic polishing member, so that the lens mold can be washed without leaving dirt on the lens mold and without marring the lens mold.

In order to attain the first object mentioned above, according to the present invention, there is provided a scrubbing apparatus including: a mold holding unit for holding and rotating a lens mold for molding a plastic lens; a pressing unit spaced from the mold holding unit; a polishing member holding unit for holding and rotating an elastic polishing member; an operating unit for operating the mold holding unit and/or the polishing member holding unit so as to perform a washing operation and a self-washing operation, the washing operation including moving the elastic polishing member or the lens mold while pressing the elastic polishing member against the lens mold, and the self-washing operation including pressing the elastic polishing member against the pressing unit; and a liquid supplying unit for supplying a liquid to the elastic polishing member while the elastic polishing member is performing the washing operation and the self-washing operation.

While the lens mold is held and rotated by the mold holding unit, the elastic polishing member is held and rotated by the polishing member holding unit, the liquid is supplied from the liquid supplying unit, and, in this condition, the elastic polishing member is moved while being pressed against the surface of the lens mold by the operating unit, whereby the washing step is conducted. In addition, while the liquid is supplied from the liquid supplying unit, the elastic polishing member being rotated by the polishing member holding unit is pressed against the pressing unit by the operating unit, whereby the self-washing step is conducted.

Preferably, the operating unit effects the washing operation and the self-washing operation alternately, and effects the self-washing operation when the washing operation is at rest for a predetermined period of time. When the washing operation is at rest for a long time, the elastic polishing member may be dried. With the self-washing operation conducted when the washing operation is at rest for a predetermined period of time, it is possible to prevent the elastic polishing member from being dried, and to prevent the lens mold from being marred.

Preferably, the liquid supplying unit supplied a slurry containing an abrasive dispersed in water. Where the slurry containing an abrasive dispersed in water is supplied to the surface of the lens mold, it is possible to polishing the lens mold surface through the abrasive, and to effectively remove dirt from the lens mold surface.

Preferably, the liquid supplying unit supplies water. In this case, it is possible to clean the surface of the lens mold through scrubbing with water, to wash the elastic polishing member with water, and to remove dirt or foreign matter deposited on the elastic polishing member itself.

In order to attain the second object mentioned above, according to the present invention, there is provided a lens mold drying method including: a hot water supplying step of supplying water heated to a predetermined temperature to a surface of a lens mold for molding a plastic lens while rotating the lens mold; and a drying step of supplying dry air to the surface of the lens mold while rotating the lens mold, after the hot water supplying step.

With heated water poured to the lens mold being rotated, it is possible to wash away the dirt or foreign matter present on the surface of the lens mold and to heat the lens mold. With dry air supplied while rotating the lens mold, a uniform thin film of water is formed on the surface of the lens mold, and thereafter the water on the surface is evaporated by the heat accumulated in the lens mold or by the heat of the hot water itself, so that the surface of the lens mold can be dried without leaving such defects as water discoloration and stains on the surface. Therefore, good appearance quality can be obtained without using an organic solvent and without needing a large-scale equipment for vacuum drying or the like.

Preferably, the heated water is pure water. With pure water used, it is possible to dry the lens mold without leaving such defects as water discoloration and stains on the surface of the lens mold.

In order to attain the second object mentioned above, according to the present invention, there is provided a lens mold drying apparatus including: a mold holding unit for holding and rotating a lens mold for molding a plastic lens; a hot water supplying unit for supplying water heated to a predetermined temperature to a surface of the lens mold; and a dry air supplying unit for supplying dry air to the surface of the lens mold.

With heated water supplied from the hot water supplying unit to the lens mold being held and rotated by the mold holding unit, it is possible to wash away the dirt or foreign matter from the surface of the lens mold, and to heat the lens mold. In addition, with dry air supplied from the dry air supplying unit to the lens mold being held and rotated by the mold holding unit, it is possible to dry the lens mold. A uniform thin film of water is formed on the surface of the lens mold in the hot water supplying step, and thereafter the water present on the surface is evaporated by the heat accumulated in the lens mold or by the heat of the hot water itself in the drying step, so that it is possible to dry the lens mold without leaving such defects as water discoloration and stains on the surface of the lens mold.

Preferably, the dry air supplying unit is disposed on the upper side of the mold holding unit, and a cover member surrounding the mold holding unit is provided with an exhaust port in a lower portion thereof. The dry air is supplied in the form of a downward flow, whereby water present on the top face of the lens mold held by the mold holding unit can be dried speedily.

In order to attain the third object mentioned above, according to the present invention, there is provided a method of manufacturing a plastic lens, including the steps of disposing a pair of lens molds opposite to each other with a predetermined spacing therebetween, sealing the gap between the lens molds to form a lens-shaped cavity, charging a curable composition into the cavity, and curing the curable composition to thereby mold the plastic lens, wherein the curable composition is heated to a temperature higher than room temperature or cooled to a temperature lower than room temperature, and the temperatures of the pair of lens molds are set to within ± 10°C from the temperature of the curable composition by heating or cooling.

Where the temperature difference between the lens molds and the curable composition is large, a convection would be generated in the charged curable composition, and, if the curable composition is cured in the presence of the convection, internal strains would be generated, thereby spoiling the optical characteristics of the lens to be obtained. Even where the curable composition being heated is injected into a lens mold assembly for cast polymerization of a plastic lens, setting a small temperature difference between the lens molds and the curable composition makes it possible to restrain the generation of a convection in the curable composition, to restrain the generation of strains in the lens molded, and to enhance the yield of the lens.

Preferably, the pair of lens molds are heated by washing the lens molds and/or by drying the lens molds with water heated to a predetermined temperature. With the lens molds heated in the washing step and the drying step, the need for a separate heating equipment is eliminated, whereby it is possible to simplify the apparatus and to reduce cost.

### Brief Description of Drawings

Fig. 1 is a flowchart of the process for cast polymerization molding of a plastic lens;
Fig. 2(a) is a side view of female and male lens molds, and Fig. 2(b) is a perspective view of a lens mold assembly constructed by using the female and male molds and a pressure sensitive adhesive tape;
Fig. 3 is a conceptual diagram for illustrating the step of injecting a curable composition into the lens mold assembly;
Figs. 4 are plan views showing generally a lens mold washing apparatus, in which Fig. 4(a) shows the condition where lens molds are being conveyed by a conveyor, and Fig. 4(b) shows the condition where the lens molds are being washed;
Figs. 5 schematically show the structure of a gripping unit in the conveyor, in which Fig. 5(a) shows the condition immediately before the lens mold is gripped by the gripping unit, while Fig. 5(b) shows the condition where the lens mold is gripped by the gripping unit, and in each of Figs. 5(a) and 5(b), the upper part is a side view and the lower part is a plan view;
Fig. 6 schematically shows the structure of a scrubbing apparatus;
Fig. 7 schematically shows the structure of a self-washing apparatus;
Fig. 8 schematically shows the structure of a drying apparatus; and
Fig. 9 schematically shows the structure of another drying apparatus.

### Best Mode for Carrying out the Invention

Now, some embodiments of the present invention will be described below. It is noted, however, that the present invention is not limited to the following embodiments.

The process for molding a plastic lens by cast polymerization, as shown in the flowchart in Fig. 1, comprises: a washing step of preparing a female mold 1 having a convex surface molding surface 11 for a lens and a male mold 2 having a concave surface molding surface 21 for the lens and washing at least the molding surfaces of the molds; a water washing step of washing the lens molds with water to remove an abrasive and the like; a drying step of drying the lens molds having been wetted with water; a mold assembly step of assembling the female mold 1 and the male mold 2 having been cleaned through the series of washing steps by a tape mold process or the like as shown in Fig. 2; a curable composition injection step of charging a curable composition into a cavity 4 of the constructed lens mold assembly 5; a polymerization step of polymerizing and curing the charged curable composition 6; and a demolding step of finally obtaining the cured plastic lens out of the lens molds 1, 2. Where the molded plastic lens is a spectacle lens, the plastic lens is then subjected selectively to polishing, dyeing, hard coat formation, antireflection film formation and the like, whereby a final plastic spectacle lens to be delivered to the wearer is obtained.

The scrubbing method and the scrubbing apparatus of the present invention for attaining the above-mentioned first object are used in the washing step and the water washing step in the above molding process.

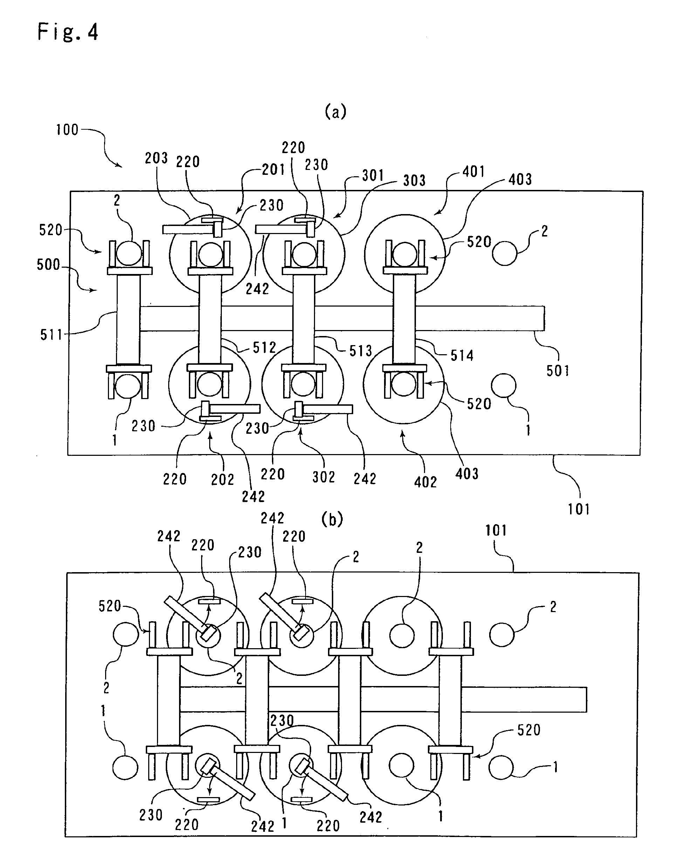

Figs. 4 show plan views of a lens mold washing apparatus in which systems each comprising two scrubbing apparatuses and a lens mold drying apparatus are arranged in parallel, whereby a female mold and a male mold can be subjected to a scrubbing step, a water washing step and a drying step in parallel and continuously. Fig. 4(a) shows the condition where the lens molds are being conveyed by conveying units, and Fig. 4(b) shows the condition where the lens molds are being washed.

The lens mold washing apparatus 100 has a structure in which a first scrubbing apparatus 201, a first water scrubbing apparatus 301 and a first drying apparatus 401 are arranged in one line in a clean area 101, and, opposite to this line, a second scrubbing apparatus 202, a second water scrubbing apparatus 302 and a second drying apparatus 402 are arranged in one line in the clean area 101. The units are surrounded by bottomed hollow cylindrical cover members 203, 303, 403. A conveyor 500 for conveying the lens molds 1, 2 into and out of these units is disposed. The conveyor 500 comprises an elongate main arm 501 extending long through a central area from the entrance side on the left toward the exit side on the right, and the main arm 501 is reciprocated over a predetermined distance to the entrance side and the exit side. Central portions of four transverse arms 511, 512, 513, 514 orthogonal to the main arm 501 are vertically movably mounted to the main arm 501 in correspondence with the above-mentioned units, respectively, and a total of eight gripping units 520 having the same structure for clamping and supporting the lens molds 1, 2 are provided respectively at both ends of the transverse arms 511, 512, 513, 514. The gripping units 520 are synchronously moved attendant on the reciprocating motions of the main arm 501.

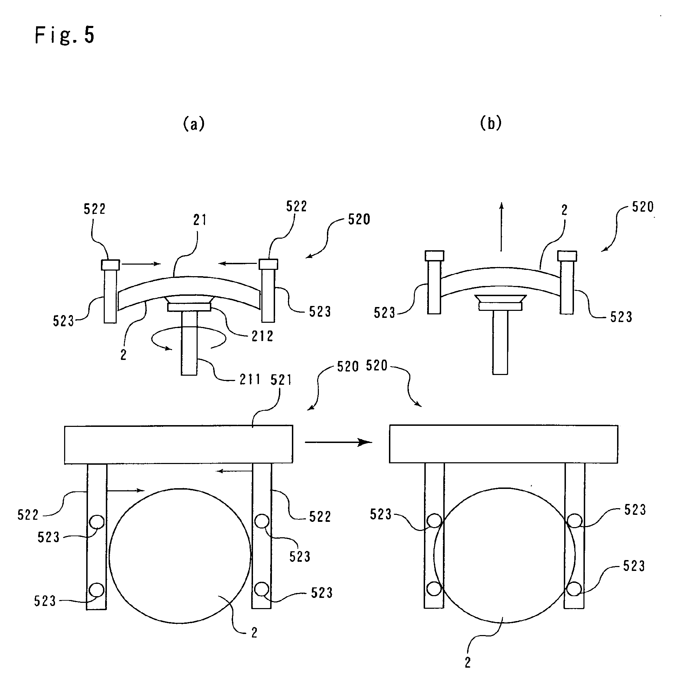

Figs. 5 schematically show the structure of the gripping unit 520. The gripping unit 520 has a structure in which a pair of clamping arms 522 driven toward and away from each other are supported on a support arm 521 on one side thereof, and two each of cylindrical finger portions 522 extending vertically downwards from each clamping arm 522 are provided. When the clamping arms 522 are moved toward each other, the side surface of the lens mold 1, 2 is supported at four locations by the finger portions 523, and, when the clamping arms 522 are moved away from each other, the finger portions 523 release the lens mold 1, 2.

As shown in Figs. 4, the conveyor 500 conveys the lens molds 1, 2 from stand-by positions on the entrance side, in the manner of conveying, for example, the male mold 2 sequentially into and out of the first scrubbing apparatus 201, the first water scrubbing apparatus 301 and the first drying apparatus 401, while simultaneously conveying, for example, the female mold 1 sequentially into and out of the second scrubbing apparatus 202, the second water scrubbing apparatus 302 and the second drying apparatus 402. When the scrubbing apparatuses are operating, as shown in Fig. 4(b), the main arm 501 of the conveyor 500 is so disposed that the transverse arms 511, 512, 513, 514 are disposed in the areas between the units. The female mold 1 and the male mold 2 are respectively cleaned by being subjected sequentially to the scrubbing step, the water washing step, and the drying step in parallel by these units, and are then simultaneously conveyed to a mold assembly unit (not shown).

The first scrubbing apparatus 201, the first water scrubbing apparatus 301, the second scrubbing apparatus 202 and the second water scrubbing apparatus 302 are the same in basic structure. In the following, the case of washing the male mold 2 will be described, the same being applied to the female mold 1 also.

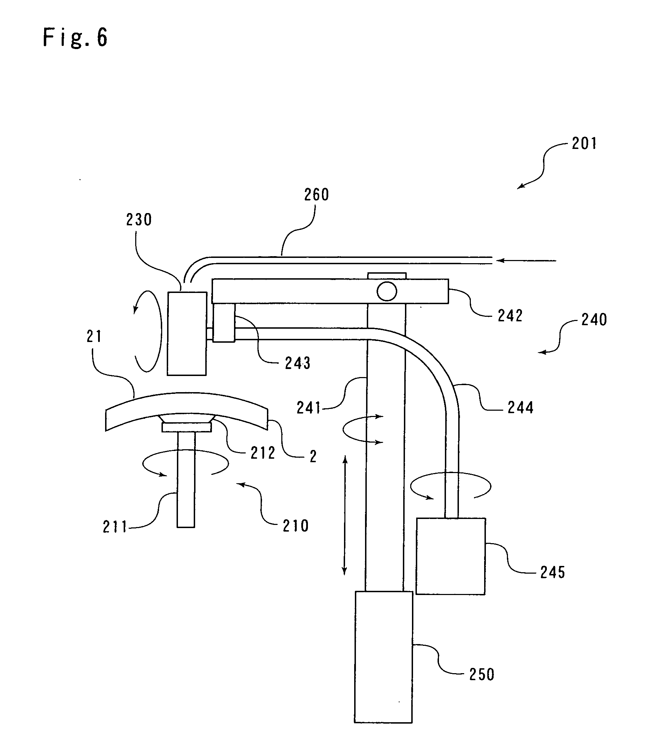

Fig. 6 schematically shows the structure of the first scrubbing apparatus 201 as a representative of the scrubbing and water scrubbing apparatuses. A mold holding unit 210 for holding and rotating the male mold 2 is disposed substantially at the center of the inside of the hollow cylindrical cover member 203 (see Fig. 4). The mold holding unit 210 comprises a rotary shaft 211, and a suction chuck 212 provided at the upper end of the rotary shaft 211. The rotary shaft 211 is hollow, and is driven to rotate with a vertical axis as a center by a driving motor (not shown). The suction chuck 212 is for holding the male mold 2 by suction, and is communicated with the hollow portion of the rotary shaft 211. The conveyor 500 conveys in the male mold 2 in such a manner that the geometrical center of the circular male mold 2 coincides with the center of the rotary shaft 211 and the lower surface of the male mold 2 makes contact with the suction chuck 212. A vacuum piping (not shown) is connected to the hollow portion of the rotary shaft 211, and, when the lower surface of the male mold 2 has come into contact with the suction chuck 212, the suction chuck 212 is evacuated, whereby the lower surface of the mole mold 2 can be held under suction by the suction chuck 212. The upper surface of the male mold 2 thus held is a concave surface molding surface 21 which needs precise cleaning. In the case of the female mold 1, a convex surface molding surface 11 is the upper surface, and the lower surface is held by suction. In addition, inside the cover member 203, a pressing unit 220 (see Fig. 4) in a rod-like shape, for example, is disposed at a position away from the mold holding unit 210 and close to the cover member 203. The pressing unit 220 will be described later.

A short-axis cylindrical elastic polishing member 230 is rotatably held on a polishing member holding unit 240 so that the circumferential surface of the elastic polishing member 230 can be rotated with a horizontal axis as a center. The polishing member holding unit 240 comprises a vertically standing support column 241, which is disposed on the outside of the cover member 203. The support column 241 is driven to rotate both clockwise and counterclockwise by a drive force supplied from an operating unit 250, and can be moved upwards and downwards within a predetermined range. A base portion of a cantilever-type support arm 242 extending in a horizontal direction is attached to the upper end of the support column 241. A horizontal bearing 243 is fixed to the tip end of the support arm 242. One end portion of a flex shaft 244 is supported on the bearing 243, and an end portion of the flex shaft 244 passed through the bearing 243 is fixed to a hollow portion at the center of the elastic polishing member 230. The other end portion of the flex shaft 244 is connected directly to the rotary shaft of a motor 245. The rotation of the motor 245 is transmitted to the elastic polishing member 230 through the flex shaft 244. Therefore, the elastic polishing member 230 is rotatably held on the polishing member holding unit 240 so that it can be driven to rotate about a horizontal rotational axis. In addition, the elastic polishing member 230 can be swiveled attendant on the rotation of the support column 241 under the driving of the operating unit 250, and can be moved upwards and downwards attendant on the upward and downward movements of the support column 241.

The control of the rotation and vertical movements of the support column 241 under the driving of the operating unit 250 is performed by sequential control, for example. The operating unit 250 effects: a washing operation in which the elastic polishing member 230 disposed on the upper side of a substantially central portion of the male mold 2 held and rotated by the mold holding unit 210 is moved downwards so that the elastic polishing member 230 being rotated is pressed against the male mold 2 being rotated and is thereby deformed, and the elastic polishing member 230 being rotated is moved from the center to an end edge of the male mold 2 at a predetermined velocity; an operation in which the elastic polishing member 230 reaching the end edge of the male mold 2 is moved upwards to be spaced away from the male mold 2; a self-washing operation in which the elastic polishing member 230 located on the upper side of the end edge of the male mold 2 is moved in a horizontal direction and is pressed against the pressing unit 220; and an operation in which, after the washed male mold 2 is conveyed from the mold holding unit 210 to the next step by the conveyor 500, a new mold 2 is held by the mold holding unit 210 and then the elastic polishing member 230 being pressed against the pressing unit 220 is disposed on the upper side of the center of the male mold 2. These operations are repeated.

As the elastic polishing member 230, a liquid-permeable polishing sponge can be used. The material of the sponge is PVA, urethane, PP or the like. In addition, at the time of forming the sponge, a sponge of PVA, urethane, PP or the like with an abrasive dispersed therein can be used. The elastic polishing member 230 with an abrasive dispersed therein can be used both for the scrubbing apparatuses 201, 202 and for the wash scrubbing apparatuses 301, 302. PVA is hard in its dried state and is softened to be spongy when wetted. The shape of the elastic polishing member 230 is generally a short-axis cylindrical shape, and may be dome-like, for example; namely, the shape is not particularly limited. The circumferential surface of the elastic polishing member 230 used for polishing the lens molds 1, 2 may be rugged or may be smooth.

On the upper side of the elastic polishing member 230, a liquid discharge port 260 is provided in the state of being fixed to the horizontal arm 242 of the polishing member holding unit 240, whereby a liquid can be discharged from the upper side of the elastic polishing member 230 to be supplied to the elastic polishing member 230. The liquid discharge port 260 is so arranged that the liquid can always be supplied to the elastic polishing member 230 even when the elastic polishing member 230 is moved. Since the elastic polishing member 230 is composed of a liquid-permeable sponge, the liquid supplied to the elastic polishing member 230 permeates through the elastic polishing member 230, to be supplied to the surface of the male mold 2. When the elastic polishing member 230 is being pressed against the concave surface molding surface 21 of the male mold 2, the liquid penetrates through the elastic polishing member 230, to be supplied to the area between the elastic polishing member 230 and the concave surface molding surface 21 of the male mold 2.

During the operation in which the elastic polishing member 230 is pressed against the male mold 2 and is moved from the center to the end edge of the male mold 2, the washing step is performed; during the operation in which the elastic polishing member 230 is pressed against the pressing unit 220, the self-washing step is performed. During these operations of the elastic polishing member 230, the elastic polishing member 230 is always rotated. At the time of washing the lens molds 1, 2 in a continuous manner, the washing step and the self-washing step are alternately performed. Besides, when the male mold 2 is not fed in during the operation, the rotation of the elastic polishing member 230 is stopped in the condition where the elastic polishing member 230 is pressed against the pressing unit 220, and the supply of the liquid is also stopped; however, the rotation of the elastic polishing member 230 and the supply of the liquid are conducted periodically, whereby the self-washing step is performed periodically.

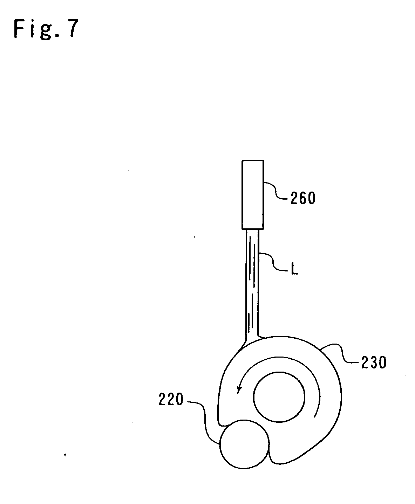

Fig. 7 illustrates the concept of the condition where the self-washing step is being performed. The circumferential surface of the elastic polishing member 230 being rotated is pressed against the round rod-like pressing unit 220 and is thereby deformed. While the elastic polishing member 230 is being thus deformed, the liquid L is supplied from the liquid discharge port 260 to the upper surface of the elastic polishing member 230. In the first scrubbing apparatus 201 and the second scrubbing apparatus 202, the liquid is water where the elastic polishing member 230 is of the type of containing an abrasive dispersed therein, and the liquid is a slurry containing an abrasive dispersed in water where the elastic polishing member 230 is of the type of not containing an abrasive. In the first water scrubbing apparatus 301 and the second water scrubbing apparatus 302, the liquid is water or water heated to a predetermined temperature, for the purpose of rinsing. As the water for rinsing, pure water is preferably used. As the abrasive, any of those abrasives which are commercially available generally for polishing glasses or metals can be used. Examples of the usable abrasives include metal oxides such as Al₂O₃, CeO₂, SiO₂, SiO, ZrO₂, Cr₂O₃, etc., and carbides such as SiC, C, etc. For the glass-made lens molds 1, 2, CeO₂ can be used favorably. The grain size and shape of the abrasive are arbitrarily determined according to the material and shape of the lens molds to be polished, the matter deposited on the surfaces of the lens molds, or the desired surface roughness. The slurry containing an abrasive dispersed in water is used for the purpose of diffusing the frictional heat between the elastic polishing member 230 and the lens molds 1, 2, and for the purpose of enhancing the performance of following up to the shapes of the convex surface molding surface 11 and the concave surface molding surface 21.

Thus, the self-washing step is a step of washing the elastic polishing member 230 itself and removing the dirt therefrom, by supplying the liquid while deforming the elastic polishing member 230. With the self-washing step thus provided, it is possible to remove the dirt or foreign matter adhering to the elastic polishing member 230, to prevent the dirt or foreign matter from re-adhering to the lens molds 1, 2 from the elastic polishing member 230, and to achieve precise cleaning of the lens molds 1, 2. Particularly, in the method of constructing the lens mold assembly 5 by use of the pressure sensitive adhesive tape 3 according to the tape mold process, the pressure sensitive adhesive of the pressure sensitive adhesive tape 3 may be left on the lens molds 1, 2, and the residue of the pressure sensitive adhesive thus left may adhere to the elastic polishing member 230, so that the residue of the pressure sensitive adhesive re-adheres to the lens molds 1, 2, causing contamination. The self-washing step is effective for removing the residue of the pressure sensitive adhesive. In addition, where washing is at rest for a long period of time, the elastic polishing member 230 is dried, and, if washing is conducted by use of the elastic polishing member 230 being in the dried state, the molding surfaces of the lens molds 1, 2 would be marred. Therefore, the self-washing step also has the function of preventing the elastic polishing member 230 from being dried, and the function of preventing the lens molds 1, 2 from being marred. Where the feeding-in of the lens molds 1, 2 is at rest for not less than a predetermined period of time during the operation, the drying of the elastic polishing member 230 can be securely prevented by forcibly performing the self-washing periodically.

As a method for deforming the elastic polishing member 230 in the self-washing step, there is generally adopted a method in which a round rod-like or hollow cylindrical pressing unit 220 and the elastic polishing member 230 are pressed against each other. As for the size of the pressing unit 220, such a size is necessary that the pressing unit 220 makes contact with the whole area of the circumferential surface, used for washing, of the elastic polishing member 230 when the elastic polishing member 230 is rotated. The sectional shape of the pressing unit 220 may be round or polygonal; where the elastic polishing member 230 is susceptible to marring in view of the material thereof, the sectional shape of the pressing unit 220 is desirably round. Examples of the material of the pressing unit 220 include iron, stainless steel, plastics, and ceramics. The effect of washing is lowered if the material of the pressing unit 220 is too soft to endure the pressing of the elastic polishing member 230 thereagainst. Besides, such a material as to cause back contamination of the elastic polishing member 230 due to rust or bleed-out cannot be used as the material of the pressing unit 220. The pressing unit 220 is preferably so arranged that its portion brought into contact with the elastic polishing member 230, at a position where the elastic polishing member 230 is spaced away from the lens molds 1, 2 when the polishing member holding unit 240 is swiveled, is parallel to the rotational axis of the elastic polishing member 230 and is brought into uniform contact with the circumferential surface of the elastic polishing member 230.

The scrubbing step performed by the first scrubbing apparatus 201 will be described. The scrubbing step is applied also to the case where the female mold 1 is washed by the second scrubbing apparatus 202. The male mold 2 located in the stand-by position is conveyed into the first scrubbing apparatus 201 by the conveyor 500, and the lower surface of the male mold 2 with the convex surface molding surface 21 up is held by the suction chuck 212 of the mold holding unit 210 by suction. The mold holding unit 210 rotates the male mold 2 at a rate of 500 to 1000 rpm. While the polishing member holding unit 240 is rotating the elastic polishing member 230 at a rate of 30 to 500 rpm, the operating unit 250 rotates the support column 241 so as to dispose the elastic polishing member 230 on the upper side of the male mold 2, and then lowers the elastic polishing member 230 to press the elastic polishing member 230 against a central portion of the male mold 2. A slurry containing an abrasive is supplied from the liquid discharge port 260 to the circumferential surface on the upper side of the elastic polishing member 230. The quantity of the slurry supplied is appropriately determined. If the quantity is too small, the dirt on the male mold 2 cannot be removed sufficiently, and if the quantity is too large, the slurry may be spattered to the outside of the cover member 203 due to the rotation of the lens molds 1, 2 and the elastic polishing member 230. Where sufficient scrubbing can be achieved with the quantity of the slurry supplied at the time of self-washing, the slurry may not necessarily be supplied during the scrubbing. While the elastic polishing member 230 is pressed against the male mold 2 and rotated, it is moved from the center to the end edge of the male mold 2 to thereby polish the convex surface molding surface 21 through the abrasive. In the washing step, while the male mold 2 is rotated and the abrasive-containing slurry is supplied to the area between the elastic polishing member 230 and the surface of the male mold 2, the elastic polishing member 230 is rotated and pressed against the male mold 2 so as to movingly wash the male mold 2. By this washing step, the dirt or foreign matter present on the whole part of the concave surface molding surface 21 of the male mold 2 can be removed through rubbing with the abrasive.

After the washing step, the operating unit 250 rotates the support column 241 to move the elastic polishing member 230 from the lens mold 2 to the pressing unit 220, and the self-washing step is conducted in which, while the elastic polishing member 230 is pressed against the pressing unit 220, the polishing member holding unit 240 rotates the elastic polishing member 230 at a rate of 30 to 500 rpm, and, in this condition, the liquid supplying unit 260 supplies the abrasive-containing slurry to the elastic polishing member 230, and the elastic polishing member 230 is deformed by the pressing member 220. The period of time for which the self-washing is conducted varies depending on the contamination condition of the elastic polishing member 230. However, it is desirable to set the period to such an extent as not to affect the tact time of the washing; ordinarily, the period may be several seconds within the time for conveying the lens molds 1, 2. In addition, before the start of the washing and after a long-time rest of the washing, it is preferable to perform self-washing to wet and soften the elastic polishing member 230, since the elastic polishing member 230 in a dried state may damage the lens molds 1, 2.

By alternately performing the washing step and the self-washing step in the scrubbing step, it is ensured that the self-washing step is conducted between the washing steps. By this, the washing step can be performed always with the elastic polishing member 230 in the cleaned state, so that the lens molds 1, 2 can be washed without leaving the dirt thereon and without marring them.

Where the elastic polishing member 230 is of the type of containing an abrasive dispersed therein, by only replacing the slurry with water, the washing step and the self-washing step can be performed under the same conditions as above.

Next, the water washing step performed by the first water scrubbing apparatus 301 will be described. The water washing step applies also to the case of washing the female mold 1 by the second water scrubbing apparatus 302. For example, the male mold 2 having been scrubbed by the first scrubbing apparatus 201 is conveyed from the first scrubbing apparatus 201 into the first water scrubbing apparatus 301 by the conveyor 500, and the lower surface of the male mold 2 with the concave surface molding surface 21 up is held by the suction chuck 212 of the mold holding unit 210 by suction. The mold holding unit 210 rotates the male mold 2 at a rate of 500 to 1000 rpm. While rotating the elastic polishing member 230 at a rate of 30 to 500 rpm, the polishing member holding unit 240 moves the elastic polishing member 230 to dispose it on the upper side of the male mold 2, and then lowers the elastic polishing member 230 to press it against a central portion of the male mold 2. Water or water heated to a predetermined temperature is supplied from the liquid supplying unit 260 to the circumferential surface on the upper side of the elastic polishing member 230. While being pressed against the male mold 2, the elastic polishing member 230 is moved from the center to the end edge of the male mold 2, whereby the whole part of the concave surface molding surface 21 of the male mold 2 is rubbed with the elastic polishing member 230. The water washing step is conducted in which, while the lens molds 1, 2 are rotated and the elastic polishing members 230 are rotated and pressed against the lens molds 1, 2, water is supplied to the areas between the surfaces of the lens molds 1, 2 and the elastic polishing members 230, thereby washing the lens molds 1, 2 with water. By the water washing step, the abrasive and the like remaining on the molding surfaces 11 and 21 of the lens molds 1, 2 can be rubbed away.

After the washing step, the self-washing step is conducted, the elastic polishing member 230 is moved from the male mold 2 to the pressing unit 220, and the self-washing step is conducted in which, while the elastic polishing member 230 is pressed against the pressing unit 220 and is rotated at a rate of 30 to 500 rpm, water or water heated to a predetermined temperature is supplied to the elastic polishing member 230. Besides, before the start of the washing and after a long-time rest of the washing, it is preferable to perform the self-washing step to wet and soften the elastic polishing members 230, since the elastic polishing members 230 in a dried state may damage the lens molds 1, 2. Where heated water is used as the liquid to be supplied, the lens molds 1, 2 can be heated to a temperature higher than room temperature, and can be set close to the temperature of a warmed curable composition which will be described later.

Also in the water washing step, with the washing step and the self-washing step performed alternately, it is ensured that the self-washing step is conducted between the washing steps, whereby the water washing step can be performed always with the elastic polishing members 230 in the cleaned state, so that the lens molds 1, 2 can be washed without leaving the dirt thereon and without marring them.

While the washing and the self-washing of the lens molds 1, 2 are performed by moving the elastic polishing members 230 in the above description, there may be adopted a method in which the elastic polishing members 230 are fixed, whereas the mold holding units 210 holding the lens molds 1, 2 and the pressing units 220 are moved so as to press the pressing units 220 against the elastic polishing members 230, whereby the washing of the lens molds and the self-washing can be performed in the same manner as above.

In addition, while it has been described above that the liquid supplying unit moves together with the elastic polishing member and supplies the same liquid both in the washing step and in the self-washing step, there may be adopted a system in which liquid supplying units are disposed respectively at the position of the washing step and at the position of the self-washing step, and different liquids are supplied respectively.

Next, the lens mold drying method and the lens mold drying apparatus of the present invention for attaining the above-mentioned second object will be described. The lend mold drying method and the lens mold drying apparatus are used in the drying step in the flowchart shown in Fig. 1.

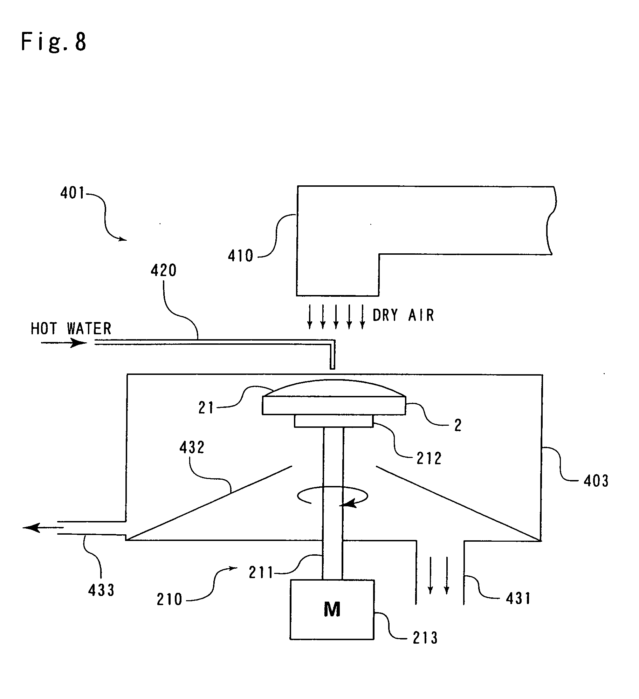

Fig. 8 schematically shows the structure of a first drying apparatus 401 used in the lens mold washing apparatus 100 shown in Fig. 4. The second drying apparatus 402 is the same with the first drying apparatus 401 in structure. In the drying apparatus 401 shown in Fig. 8, a mold holding unit 210 for holding and rotating a lens mold is disposed in a bottomed hollow cylindrical cover member 403. While the case of drying a male mold 2 for molding a concave surface is shown in Fig. 8, the same applies to a female mold 1. The mold holding unit 210 comprises a hollow rotary shaft 211 having a vertical axis, and the rotary shaft 211 is disposed penetrating through the bottom wall of the cover member 403. A suction chuck 212 is provided at the upper end of the rotary shaft 211, and a lower end portion of the rotary shaft 201 is in conjunction with a rotary motor 213 at a lower portion of the cover member 403. A dry air supplying unit 410 for blowing off dry air downwards is disposed on the upper side of the cover member 403. In addition, a nozzle-form hot water supplying unit 420 for dripping hot water is disposed on the upper side of the male mold 2 fixed to the suction chuck 212. The bottom surface of the lower portion of the cover member 403 is provided with an exhaust port 431. A truncated conical partition plate 432 for liquid drop separation which is spaced from the rotary shaft 211 is provided inside the cover member 403, whereby liquid drops falling from the male mold 2 are discharged through a drain port 433. Dry air supplied from the dry air supplying unit 410 flows as a downward flow to pass through the gap between the rotary shaft 211 and the partition plate 432, and is discharged through the exhaust port 431.

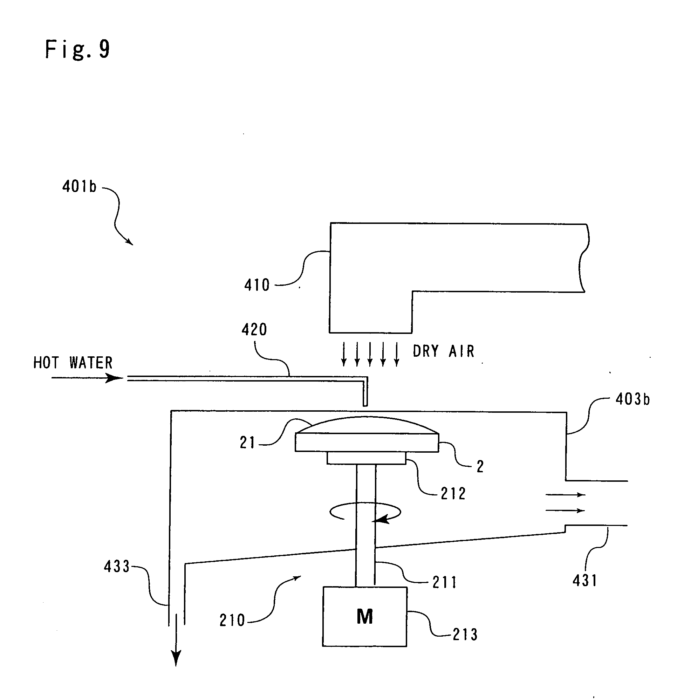

Besides, a drying apparatus as shown in Fig. 9 can also be used. The drying apparatus 401b shown in Fig. 9 is the same as that shown in Fig. 8 in basic structure. In this case, however, a side surface of a lower portion of a cover member 403b is provided with an exhaust port 431, and dry air supplied from a dry air supplying unit 410 flows as a downward flow to pass along the surface of a concave surface molding surface 21 of a male mold 2, and is discharged through the exhaust port 431. In addition, the bottom surface of the cover member 403b is inclined toward a drain port 433, so that liquid drops falling from the male mold 2 are drained through the drain port 433. The other structures are the same as in Fig. 8, and, therefore, they are denoted by the same symbols as used above and description thereof is omitted.

In the drying step in which these drying apparatuses 401, 401b are used, the male mold 2 wetted by being washed with water by the first water scrubbing apparatus 301 is conveyed from the first water scrubbing apparatus 301 into the first drying apparatus 401 by the conveyor 500, and the lower surface of the male mold 2 is held onto the suction chuck 212 by suction. While the mold holding unit 210 is rotating the male mold 2 at a predetermined rotation speed, a hot water supplying step is conducted in which hot water is dripped from a hot water supplying unit 420 onto the surface of the concave surface molding surface 21 of the male mold 2. The hot water dripped is spread under a centrifugal force, to form a uniform thin film on the concave surface molding surface 21 of the male mold 2. Next, a drying step is conducted in which, while the mold holding unit 410 is rotating the male mold 2 at a high speed to swish water off, dry air is supplied from the dry air supplying unit 410 to the surface of the male mold 2, whereby the hot water film on the surface of the concave surface molding surface 21 of the male mod 2 is evaporated, thereby drying the male mold 2.

In the hot water supplying step, not water at normal temperature but hot water is used, for easier evaporation of water on the surfaces of the lens molds 1, 2, and for preventing the temperature from being lowered due to the latent heat of evaporation. During when hot water is supplied, the rotating speed of the lens mold is preferably 50 to 300 rpm, more preferably 100 to 200 rpm, the temperature of water is preferably 30 to 100°C, more preferably 50 to 70°C, and the quantity of water discharged is preferably 2 to 200 ml, more preferably 10 to 100 ml, where the surface area of the lens mold is 20 to 100 cm². These conditions can be determined taking into account the surface area, specific heat and thermal deformation temperature of the lens mold, the quality and quantity of dry air, the degree of replacement of the atmosphere, the temperature required of the mold in the subsequent step, etc. Another purpose of discharging water is to wash away the dirt such as abrasive brought by the lens molds 1, 2 from the preceding step. Therefore, the quality of water supplied must be kept constant according to the clarity of the surface required in the steps after the water-swishing and drying, and pure water is used, as required. In addition, the discharge of water is performed while rotating the lens molds 1, 2, for the purpose of uniform washing. Water may not necessarily be in the form of running water; for example, water may be in the form of spray, water vapor, or may be attended by ultrasonic wave.

The purpose of replacing the atmosphere on the surfaces of the lens molds 1, 2 with dry air while rotating the molds at a high speed in the drying step is to dry also the circumferential surfaces of the molds after drying the surfaces of the molds. In this case, for swishing water off, the rotating speed of the molds is preferably 200 to 3000 rpm, more preferably 800 to 2000 rpm, the absolute humidity of dry air supplied is preferably not more than 10 g/kg, more preferably not more than 5 g/kg, and the air quantity is preferably not less than 0.5 m³/min, more preferably not less than 1.0 m³/min. For enhancing the atmosphere replacement efficiency, the exhaust port 431 is preferably provided on the opposite side of the dry air supplying unit 410 with the male mold 2 therebetween. With this arrangement, dry air blown off downwards from the dry air supplying unit 410 flows substantially vertically and flows through the vicinity of the surface of the molding surface 21, to be discharged through the exhaust port 431. Where the exhaust port is not provided on the opposite side of the dry air supplying unit 410 with the lens molds 1, 2 therebetween, the humidity in the surroundings of the surfaces of the lens mold 1, 2 would be raised, and drying would be hindered. The surfaces of the lens molds 1, 2 are cooled by the latent heat of evaporation when dry air is supplied thereto. Therefore, where the exhaust port is not provided, re-dewing may occur on the surfaces of the molds after the surfaces are once dried, so that it may be necessary to continue the supply of dry air until the atmosphere is replaced. Incidentally, dry air may be warmed.

Where there is no limitation as to the temperature required of the lens molds in the subsequent step, it is possible to set the absolute humidity of dry air at a high value and set the air quantity at a low value, by setting a high hot-water temperature and setting a high discharge quantity value. On the contrary, where the temperature required of the lens molds in the subsequent step is near room temperature, it is necessary to set a low hot-water temperature and a low discharge quantity value, thereby setting the absolute humidity of dry air at a low value and setting the air quantity at a high value.

As the dry air supplied, dry air obtained by use of a general dehumidifier such as a cooling type dehumidifier using a refrigerant and an absorption type dehumidifier using silica gel or the like may be used, and compressed air may also be used, provided that a measure is taken to prevent liquid drops from being scattered at the time of water-swishing. Besides, dry air lowered in relative humidity by heating air may also be used. The supply of dry air may be continued even at the time of dripping hot water.

According to the lens mold drying method and drying apparatus as above-described, by pouring warmed water to the lens mold being rotated, the dirt or foreign matter present on the surface of the lens mold can be washed away. In addition, by supplying dry air while warming the lens mold and rotating the lens mold, it is ensured that a uniform thin film of water is formed on the surface of the lens mold and thereafter the water on the surface is evaporated by the heat accumulated in the lens mold or the heat of hot water itself, so that the lens mold can be dried without leaving such defects as water discoloration and stains on the surface of the lens mold. Since an organic solvent such as a flon-based, alcohol-based or chlorine-based organic solvent or the like is not used, this system exerts little burden on the environments, and the apparatus may not necessarily be provided with explosion-proof specifications. Besides, drying free of the troubles of water discoloration, stains and the like can be achieved without adding a new step and while using a simple and inexpensive apparatus.

### [Example 1]

A plastic-molding glass molds with a diameter of 90 mm whose surfaces had been scrubbed with a urethane-made sponge in the preceding step was set in the drying apparatus 401 shown in Fig. 8.

While the glass mold was being rotated at a rate of 200 rpm, 20 ml of pure water heated to 60°C was discharged from the hot water supplying unit 420 to a central portion of the surface of the glass mold.

Next, while the glass mold was being rotated at a rate of 2000 rpm, dry air with an absolute humidity of 5 g/kg was supplied from the dry air supplying unit 410 at a rate of 1.0 m³/min. In this instance, dry air was exhausted through the exhaust port 431 at a rate of 1.0 m³/min.

Thereafter, the glass mold was taken out, then the dried conditions of the surface of the glass mold and the side surface of a circumferential portion of the glass mold were confirmed, and a plastic lens was molded by use of the glass mold.

### [Example 2]

A plastic-molding glass mold with a diameter of 90 mm whose surface had been immersed in an alkaline solution containing a surfactant in the preceding step was set in the drying apparatus 401b shown in Fig. 9.

While the plastic-molding glass mold with a diameter of 90 mm was being rotated at a rate of 200 rpm, 30 ml of pure water heated to 70°C was discharged from the hot water supplying unit 420 to a central portion of the surface of the plastic-molding glass mold.

Next, while the plastic-molding glass mold was being rotated at a rate of 2000 rpm, dry air with an absolute humidity of 3 g/kg was supplied from the dry air supplying unit 410 at a rate of 2.0 m³/min. In this instance, dry air was exhausted through the exhaust port 431 at a rate of 2.0 m³/min.

Thereafter, the plastic-molding glass mold was taken out, and the dried conditions of the surface of the glass mold and the side surface of a circumferential portion of the glass mold were confirmed.

When the dried conditions of the surfaces and the circumferential portion side surfaces of the glass molds subjected to water swishing and drying in Examples 1 and 2 were checked, it was found that the surfaces and side surfaces of the glass molds had all been completely dried, without leaving water drops, fogs or the like thereon. In addition, when plastic lenses were molded by use of the glass molds subjected to water swishing and drying in Examples 1 and 2, the lenses obtained showed good quality free of quality problems.

The female mold 1 and the male mold 2 cleaned by these washing steps are assembled into a lens mold assembly 5 shown in Fig. 2(b) by use of a pressure sensitive adhesive tape in an assembling apparatus (not shown) connected to the lens mold washing apparatus 100.

In assembling the lens molds 1, 2, the centers of the lens molds 1, 2 are determined, and, while the non-molding surface sides of the lens molds 1, 2 are held, the center height of each molding surface relative to a reference height is measured. Then, the lens molds 1, 2 are held in such a manner that the centers of the lens molds 1, 2 are located on the same line, and, in this condition, the lens molds 1, 2 are conveyed. Thereafter, arithmetic operation is performed based on the data of the heights of the center portions of the lens molds 1, 2 relative to predetermined reference positions, the lens molds 1, 2 are so held as to provide a predetermined spacing between the molding surfaces of the lens molds 1, 2, and, in this condition, the lens molds 1, 2 are conveyed. Finally, the pressure sensitive adhesive tape 3 is wound around the circumferential surfaces of the lens molds 1, 2 over at least one turn, to form the lens mold assembly 5, and then the pressure sensitive adhesive tape 3 is cut, to complete the process.

Besides, in assembling the lens molds 1, 2, a tubular resin-made gasket may be used as a cavity-forming member. In this case, by press fitting the lens molds 1, 2 into the gasket so as to provide a predetermined spacing between the lens molds 1, 2, a lens mold assembly can be formed.

Next, the method of manufacturing a plastic lens according to the present invention for attaining the above-mentioned third object will be described. In the curable composition injection step shown in Fig. 3, for enhancing injection efficiency, the viscosity of a curable composition 6 may be lowered to increase the injection flow rate through a small-diameter injection nozzle 7. A heater 11 may be disposed on the outside surface of a pressure vessel 8, a heater 12 may also be wound around a piping 9 constituting a conduit, and the heaters 11, 12 may be operated to heat the curable composition 6 to a temperature higher than room temperature. For example, a photo-polymerization type curable composition less susceptible to be influenced by warming is warmed, to lower the viscosity of the curable composition. On the other hand, there are curable compositions which are high in polymerization reactivity and, therefore, must be stored at a temperature lower than room temperature and be subjected to initial polymerization at a temperature lower than room temperature. In the prior art, the temperature of the lens mold assembly 5 was room temperature, irrespectively of the temperature of the curable composition.

However, if there is a large temperature difference between the lens molds 1, 2 and the curable composition 6, a convection occurs in the curable composition 6 charged. The convection does not disappear until the temperature difference becomes small. It has been found that when the curable composition 6 is cured in the presence of the convection therein, internal strains are generated, to spoil the optical characteristics of the lens obtained, thereby causing a lowering in the yield of the product.

In view of the above, the curable composition 6 is heated to a temperature higher than room temperature or is cooled to a temperature lower than room temperature, the temperature of the lens molds 1, 2 are set to within
± 10°C from the temperature of the curable composition 6, preferably to within ± 5°C from the temperature of the curable composition 6 by heating or cooling. By this, it was possible to enhance conspicuously the yield of the plastic spectacle lens obtained upon molding. From the viewpoint of energy saving, it is desirable to lower the temperature of the lens molds 1, 2 within the above-mentioned range from the temperature of the curable composition.

The lens molds 1, 2 can be warmed or cooled, for example, by arranging a hot-air warmer or a heating furnace for warming the lens molds 1, 2 or a thermostat for cooling the lens molds 1, 2, on the downstream side of the lens mold washing apparatus 100 shown in Fig. 4.

In the case of warming the lens molds 1, 2, water heated to a predetermined temperature may be used in the above-mentioned water scrubbing apparatuses 301, 302 and the drying apparatuses 401, 402 using the heated water may be adopted, whereby the lens molds 1, 2 can be warmed without using a special heating equipment. This system is advantageous from the viewpoints of energy saving, equipment cost, and production lead time.

The temperature of water in the water scrubbing apparatuses 301, 302 is set at a temperature higher than the temperature of the curable composition 6 by at least 10°C, taking into account the time until the injection of the curable composition 6 and the heat capacities of the lens molds 1, 2. The quantity of heated water to be used may be at such a level that the lens molds 1, 2 can be sufficiently washed therewith. Depending on the thicknesses of the lens molds 1, 2, however, it may be necessary to supply heated water in an amount greater than that required for washing. When the lens molds 1, 2 are warmed, there is the merit that water present on the surfaces of the lens molds 1, 2 in the subsequent drying step conducted by use of hot water is evaporated quickly, whereby drying time can be shortened.

As for the heating of the lens molds 1, 2 by the drying apparatuses 401, 402, when heated water is supplied in such a water quantity as to wash away the foreign matter, dirt and abrasive residue present on the surfaces of the lens molds 1, 2, it is possible to sufficiently warm the lens molds 1, 2 by using the ordinary temperature and water quantity. Where heated water is not used in the water scrubbing apparatuses 301, 302 or where the time until the injection of the curable composition 6 is long, however, it may be necessary to supply water in a quantity greater than the ordinary quantity.

Incidentally, when the viscosity of the curable composition 6 is high, the flow passage is disturbed at the time of injection to cause a phenomenon in which the curable composition 6 overflows in an uncharged condition, in the cavity 4 in the lens mold assembly 5 for a lens with an extremely small thickness at the circumference thereof, such as a convex lens. As a result, a failure due to uncharging occurs, making it necessary to re-charge the curable composition, and causing an increase in the number of steps for readjustment. Thus, the warming of the curable composition has the merit that the viscosity of the curable composition is lowered, the problems of uncharging is precluded, and the loss due to readjustment is precluded.

### [Example 3]

Water heated to the same temperature was supplied from hot pure water supplying units to both the water scrubbing apparatuses 301, 302 and the drying apparatuses 401, 402, whereby the lens molds 1, 2 were heated. By setting the set temperature of the hot pure water supplying units at each of 60°C, 55°C, 50°C, 45°C, 40°C, 35°C, 30°C, and an unset value (normal temperature: 24°C), the generation rate of internal strains relative to the temperature difference between the cleaned lens molds 1, 2 and the curable composition were investigated. The temperature of the curable composition at the time of charging was set at 35°C, i.e., the temperature at which a failure due to uncharging does not arise from disturbance of the flow passage at the time of injection, even in the case of a lens with an extremely small thickness at the circumference thereof, such as a convex lens. The results are shown in Table 1.

**Table 1**

| Set Temperature | Temp. of Mold | Temp. of Curable Composition | Temperature Difference | Strain Generation Rate |
|---|---|---|---|---|
| 60°C | 48°C | 35°C | 13°C | 100% |
| 55°C | 44°C | 35°C | 9°C | 2% |
| 50°C | 39°C | 35°C | 4°C | 0% |
| 45°C | 35°C | 35°C | 0°C | 0% |
| 40°C | 31°C | 35°C | 4°C | 0% |
| 35°C | 28°C | 35°C | 7°C | 0.5% |
| 30°C | 25°C | 35°C | 10°C | 8% |
| Normal Temp. 24°C | 24°C | 35°C | 11°C | 75% |

From the results given in Table 1, it is seen that the internal strain generation rate can be reduced from 100% to 0%, by setting the temperature difference between the lens molds and the curable composition to less than 10°C, preferably to less than 5°C.

In the above description, the convex surface molding surface of the female mold and the concave surface molding surface of the male mold have been washed. In the case of using UV rays for curing the curable composition, however, it may be necessary to clean also the non-molding surfaces of the lens molds, for making perfect the light transmittance of the lens molds.

### Industrial Applicability

The scrubbing method, the scrubbing apparatus, the lens mold drying method, the lens mold drying apparatus, and the method of manufacturing a plastic lens according to the present invention pertains to a technology for use in manufacturing a plastic lens such as a plastic spectacle lens by cast polymerization molding.

## Claims

1. A scrubbing method comprising:
a washing step of rotating a lens mold for molding a plastic lens, pressing an elastic polishing member against a surface of said lens mold while rotating said elastic polishing member, and, in this condition, supplying a liquid to the area between said surface of said lens mold and said elastic polishing member so as thereby to wash said lens mold; and
a self-washing step of rotating said elastic polishing member, supplying a liquid to said elastic polishing member, and, in this condition, deforming said elastic polishing member so as thereby to wash said elastic polishing member.

2. A scrubbing method as set forth in claim 1, wherein
said liquid used in said washing step and said self-washing step is a slurry containing an abrasive dispersed in water.

3. A scrubbing method as set forth in claim 1, wherein
said liquid used in said washing step and said self-washing step is water.

4. A scrubbing method as set forth in claim 1, wherein
self-washing is conducted while deforming said elastic polishing member by pressing said elastic polishing member and a rod-like member against each other.

5. A scrubbing method as set forth in claim 1, wherein
said washing step and said self-washing step are conducted alternately.

6. A scrubbing apparatus comprising: a mold holding unit for holding and rotating a lens mold for molding a plastic lens; a pressing unit spaced from said mold holding unit; a polishing member holding unit for holding and rotating an elastic polishing member; an operating unit for operating said mold holding unit and/or said polishing member holding unit so as to perform a washing operation and a self-washing operation, said washing operation comprising moving said elastic polishing member or said lens mold while pressing said elastic polishing member against said lens mold, and said self-washing operation comprising pressing said elastic polishing member against said pressing unit; and a liquid supplying unit for supplying a liquid to said elastic polishing member while said elastic polishing member is performing said washing operation and said self-washing operation.

7. A scrubbing apparatus as set forth in claim 6, wherein
said operating unit effects said washing operation and said self-washing operation alternately, and effects said self-washing operation when said washing operation is at rest for a predetermined period of time.

8. A scrubbing apparatus as set forth in claim 6, wherein
said liquid supplying unit supplies a slurry containing an abrasive dispersed in water.

9. A scrubbing apparatus as set forth in claim 6, wherein
said liquid supplying unit supplies water.

10. A lens mold drying method comprising:
a hot water supplying step of supplying water heated to a predetermined temperature to a surface of a lens mold for molding a plastic lens while rotating said lens mold; and
a drying step of supplying dry air to said surface of said lens mold while rotating said lens mold, after said hot water supplying step.

11. A lens mold drying method as set forth in claim 10, wherein
said heated water is pure water.

12. A lens mold drying apparatus comprising: a mold holding unit for holding and rotating a lens mold for molding a plastic lens; a hot water supplying unit for supplying water heated to a predetermined temperature to a surface of said lens mold; and a dry air supplying unit for supplying dry air to said surface of said lens mold.

13. A lens mold drying apparatus as set forth in claim 12, wherein
said dry air supplying unit is disposed on the upper side of said mold holding unit, and a cover member for surrounding said mold holding unit is provided with an exhaust port in a lower portion thereof.

14. A method of manufacturing a plastic lens, comprising the steps of disposing a pair of lens molds opposite to each other with a predetermined spacing therebetween, sealing the gap between said lens molds to form a lens-shaped cavity, charging a curable composition into said cavity, and curing said curable composition to thereby mold the plastic lens, wherein
said curable composition is heated to a temperature higher than room temperature or cooled to a temperature lower than room temperature, and the temperatures of said pair of lens molds are set to within ± 10 °C from the temperature of said curable composition by heating or cooling.

15. A method of manufacturing a plastic lens as set forth in claim 14, wherein
said pair of lens molds are heated by washing said pair of lens mold and/or by drying said pair of lens molds with water heated to a predetermined temperature.
